## Europäisches Patentamt
## European Patent Office
## Office européen des brevets

(19)

(11) Veröffentlichungsnummer: **0 242 516 B1**

(12)

# EUROPÄISCHE PATENTSCHRIFT

(45) Veröffentlichungstag der Patentschrift:
31.01.90

(21) Anmeldenummer: 87101651.5

(22) Anmeldetag: 06.02.87

(51) Int. Cl.⁴: **F 16 J 15/34,** F 16 C 33/10, F 16 C 33/24

(54) Vorrichtung zur Lagerung und/oder Abdichtung einer Welle.

(30) Priorität: 07.02.86 DE 3603910

(43) Veröffentlichungstag der Anmeldung:
28.10.87 Patentblatt 87/44

(45) Bekanntmachung des Hinweises auf die Patenterteilung:
31.01.90 Patentblatt 90/5

(84) Benannte Vertragsstaaten:
AT BE CH DE FR GB IT LI NL

(56) Entgegenhaltungen:
FR-A- 2 331 416
GB-A- 2 049 644
US-A- 3 970 320

E. MAYER: "Mechanical seals", 2. Ausgabe, 1972,
ILIFFE Books, London, GB
PATENT ABSTRACTS OF JAPAN, Band 9, Nr. 300
(M-433)[2023], 27. November 1985; & JP-A-60 136 668
(IIGURU KOGYO K.K.) 20-07-1985

(73) Patentinhaber: Feodor Burgmann Dichtungswerke
GmbH & Co., Äussere Sauerlacher Strasse 6-8,
D-8190 Wolfratshausen 1 (DE)

(72) Erfinder: Schöpplein, Wolfgang, Dipl.-Ing.,
Zugspitzstrasse 12, D-8132 Tutzing (DE)
Erfinder: Zeus, Dieter, Dr.-Ing., Irschenhauser Strasse 6,
D-8021 Icking (DE)

(74) Vertreter: Empl, Karl et al, Patentanwälte Dipl.-Ing. K.
Empl Dipl.-Ing., Dipl.-Wirtsch.-Ing. K. Fehners
Schumannstrasse 2, D-8000 München 80 (DE)

**Beschreibung**

Die Erfindung betrifft eine Vorrichtung zur Lagerung und/oder Abdichtung einer Welle gegenüber einem von der Welle durchdrungenen Träger, umfassend einen am Träger drehfest gehaltenen sowie in Axial- und Radialrichtung abgestützten Körper mit einer ersten Gleitfläche und einen an der Welle drehfest gehaltenen sowie in Axial- und Radialrichtung abgestützten, die Welle ringförmig umgebenden zweiten Körper mit einer zweiten Gleitfläche, wobei beide Gleitflächen im Ruhezustand der Vorrichtung in einer gemeinsamen Berührungsfläche aneinanderliegen, welche die geometrische Form einer Rotationsfläche aufweist, deren Achse die Wellenachse ist und die Gleitfläche des einen der beiden Körper im Betriebszustand der Vorrichtung eine Gestalt annimmt, bei der in Richtung der relativen Gleitbewegung aufeinanderfolgende minimale Erhebungen und Vertiefungen dieser Rotationsfläche überlagert sind.

Eine Gleitringdichtung mit diesen Merkmalen ist aus der DE-PS 1 221 865 bekannt, von der auch der Oberbegriff des Patentanspruches 1 ausgeht. Dabei dienen die in der Gleitfläche des einen Körpers enthaltenen Erhebungen und Vertiefungen der Erzielung eines hydrodynamischen Laufverhaltens. Um bei der Fertigung sowie im Ruhestand der Vorrichtung in wünschenswerter Weise eine ebene Gleitfläche zu haben, die erst im Betriebszustand Erhebungen und Vertiefungen enthält, ist es aus dieser Schrift weiterhin bekannt, in der Gleitfläche des einen, aus völlig homogenem Material bestehenden, einstückig ausgebildeten Körpers eine Mehrzahl von Nuten vorzusehen, welche von der gleichen Seite (Außen- oder Innenumfang) ausgehen und zu dieser Seite wieder zurückkehren, ohne eine Verbindung zu der anderen Seite der Gleitfläche zu schaffen. Im Betrieb wird der Körper im Bereich der Nuten durch das abzudichtende Medium stärker gekühlt, so daß er eine thermische Verwerfung erfährt. Nachteilig ist, daß die Einarbeitung der Nuten in den aus meist sehr hartem Werkstoff bestehenden Körper beträchtlichen Aufwand erfordert und daß die Dichtspaltbreite durch die Nuten reduziert wird. In ähnlicher Weise würde sich bei Anwendung dieses Prinzips auf Gleitlager die tragende Fläche vermindern.

Bekannt sind auch Gleitringdichtungen, bei denen der eine Körper durch Fliehkraftwirkung an mehreren, um seinen Umfang verteilten Stellen einer mechanischen Beanspruchung ausgesetzt wird, die ebenfalls im Betrieb zu einer wellenförmigen Verwerfung seiner im Ruhezustand ebenen Gleitfläche führt.

Ferner ist aus der JP-A-60 136 668 eine Gleitringdichtung bekanntgeworden, bei der in der Gleitfläche eines der beiden den Dichtspalt bildenden Ringe bandförmige Zonen ausgebildet sind, deren molekulare Zusammensetzung sich von derjenigen der restlichen Gleitfläche unterscheidet. Diese bandförmigen Zonen erstrecken sich unter einem Winkel zu durch die Wellenachse gelegten Radialen vom inneren zum äußeren Durchmesser der Gleitfläche und sollen einen Fördereffekt bewirken. Eine wellenförmige Verwerfung der Gleitfläche im Betriebszustand, und zwar ausgehend von einer im Ruhezustand ebenen Gleitfläche, und damit die Schaffung der Voraussetzung für ein hydrodynamisches Laufverhalten ist gemäß dieser Druckschrift nicht vorgesehen.

Bekannt sind ferner Gleitanordnungen (DE-PS 3 213 378), bei denen die Gleitfläche des einen Körpers auf einem elastischen Ringelement ausgebildet ist, unter dem ein ringförmiger Hohlraum angeordnet ist, der sektoral in Umfangsrichtung in Kammern unterteilt ist, welche mit Umgebungs- oder Fremdflüssigkeit beaufschlagt sind. Eine derartige Gleitanordnung ist mit dem Nachteil behaftet, daß sich die Kammern durch Ablagerungen zusetzen können und damit für die Bereitstellung von einem hydrodynamischen Laufverhalten führenden Erhebungen und Vertiefungen an der Gleitfläche nicht mehr wirksam sind. Die erforderliche Elastizität des Ringelements begrenzt auch die Dicke der Verschleißschicht an der Gleitfläche.

Aufgabe der Erfindung ist es, eine Vorrichtung der eingangs genannten Art so auszubilden, daß bei geringen Herstellungskosten und hoher Betriebssicherheit eine Reduzierung der Dichtspaltbreite bzw. Verringerung der tragenden Lagerfläche vermieden wird.

Erfindungsgemäß wird diese Aufgabe dadurch gelöst, daß der eine Körper eine Mehrzahl aufeinanderfolgender räumlicher Bereiche enthält, in denen der Elastizitätsmodul und/oder Wärmedehnungskoeffizient und/oder die Wärmeleitzahl von den entsprechenden Werten des die Bereiche enthaltenden restlichen Werkstoffes des Körpers abweicht, wobei in Abschnitten dieses Körpers, welche durch die Wellenachse enthaltende, gleiche Zentriwinkel aufweisende Ebenen definiert sind, jeweils ein Bereich angeordnet ist.

Im Betrieb ist der eine Körper anderen Temperaturen und Drücken ausgesetzt, als im Ruhezustand. Diese geänderten Drücke und Temperaturen, insbesondere Temperaturdifferenzen, bewirken in Verbindung mit den unterschiedlichen Werkstoffparametern (Elastiztätsmodul/Wärmedehnungskoeffizient/ Wärmeleitzahl) in den aufeinanderfolgenden räumlichen Bereichen, daß sich in der Gleitfläche dieses einen Körpers die zur Erzielung eines hydrodynamischen Laufverhaltens angestrebten aufeinanderfolgenden Erhebungen und Vertiefungen einstellen. Unter wechselnden Betriebsbedingungen ändern sich auch die Einflußgrößen. Beispielsweise hat die Gleitgeschwindigkeit einen maßgeblichen Einfluß auf den örtlichen Druck und die Temperatur im Bereich der Gleitfläche, was wiederum zu einer von der Größe der Gleitgeschwindigkeit abhängigen Ausbildung der Erhebungen und Vertiefungen führt. Durch geeignete Wahl der Werkstoffparameter in den aufeinanderfolgenden räumlichen Bereichen und deren Ausbildung und Anordnung kann daher erreicht werden, daß sich die Gleitfläche selbsttätig in optimaler Weise den wechselnden Betriebsbedingungen anpaßt.

Weitere Merkmale und Vorteile der Erfindung ergeben sich aus den Unteransprüchen.

Zur Erläuterung der Erfindung wurde als Ausführungsbeispiel eine Gleitringdichtung gewählt. In der Zeichnung zeigt:

2

Fig. 1 einen Längsschnitt durch die Gleitringdichtung und

Fig. 2 eine perspektivische, nicht maßstäbliche Darstellung eines in der Gleitringdichtung gemäß Fig. 1 verwendbaren, eine Gleitfläche aufweisender Körpers.

Die Gleitringdichtung dient zur Abdichtung einer Welle 1 gegenüber einem topfförmigen Träger 2, um den Durchtritt eines Mediums, beispielsweise Öl, von einem abzudichtenden Raum 3 in einen Raum 4 zu verhindern. Am Boden des Trägers ist das eine Ende eines hohlzylindrischen, zur Achse 5 der Welle 1 koaxial angeordneten ersten Körpers 6 dichtend befestigt, dessen anderes Ende eine erste Gleitfläche 7 aufweist, welche in einer zur Achse 5 lotrechten Ebene liegt.

Ein zweiter hohlzylinderischer Körper 8 ist koaxial zur Achse 5 angeordnet und über ein Zwischenglied 9 drehfest und dichtend an seinem einen Ende an der Welle 1 gehalten. Sein anderes Ende weist eine in einer zur Achse 5 lotrechten Ebene gelegene zweite Gleitfläche 10 auf, welche mit axialer Vorspannung, erzielt durch einen Axialschub der Welle 1 oder eine im Zwischenglied 9 enthaltene Federanordnung, in einer gemeinsamen Berührungsfläche 11 an der ersten Gleitfläche 7 anliegt.

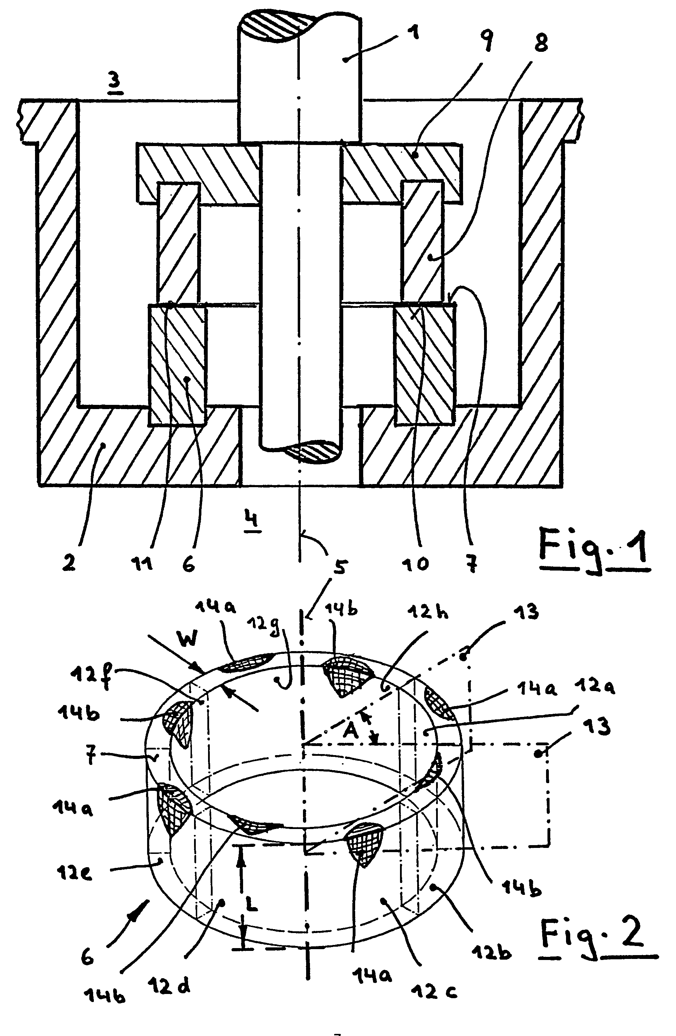

Der eine der beiden Körper 6, 8, im dargestellten Fall der Körper 6 (Fig. 2), besteht aus einem Sinterwerkstoff, insbesonder einem keramischen Sinterwerkstoff. In dem als einstückiges Bauteil ausgebildeten Körper 6 sind acht Abschnitte 12a - 12h durch Ebenen 13 definiert, welche jeweils die Achse 5 enthalten und den gleichen Zentriwinkel A einschließen. Der Abschnitt 12a und die jeweils übernächsten Abschnitte 12c, 12e, 12g enthalten jeweils einen räumlichen Bereich 14a, in dem der Werkstoff des Körpers 6 stärker verdichtet ist und demzufolge vom restlichen Werkstoff abweichende Werte für den Elastizitätsmodul und/oder den Wärmedehnungkoeffizienten und/oder die Wärmeleitzahl besitzt. Die zwischenliegenden Abschnitte 12b, 12d, 12f, 12h enthalten jeweils einen räumlichen Bereich 14b mit geringerer Verdichtung und weisen demzufolge im anderen Sinne vom restlichen Werkstoff des Körpers 6 abweichende Werte für den Elastizitätsmodul bzw. Wärmedehnungskoeffizienten bzw. die Wärmeleitzahl auf.

Die Bereiche 14a, 14b sind jeweils nahe der ersten Gleitfläche 7 angeordnet und erstrecken sich nur über einen Teil der axialen Länge L des Körpers 6. Die Bereiche 14a stärkerer Verdichtung weisen im wesentlichen die gleiche Gestalt auf. Dasselbe gilt für die Bereiche 14b geringerer Verdichtung. Vorteilhaft ist der Kern der Bereiche der einen Kategorie benachbart zum inneren Umfang des Körpers 6 und der Kern der Bereiche der anderen Kategorie benachbart zum äusseren Umfang dieses Körpers angeordnet.

An Stelle der Ausbildung der Bereiche 14a, 14b durch stärkere oder geringere Verdichtung (oder auch als ergänzende Maßnahme hierzu) kann diese Ausbildung auch durch Änderung der Zusammensetzung erfolgen (bei Siliziumkarbid-Körpern beispielsweise durch einen geänderten Siliziumgehalt) oder durch eine abweichende Korngröße.

Der Werkstoff in den Bereichen 14a, 14b reagiert im Betrieb der Vorrichtung auf die auf ihn einwirkenden Temperatur- und Druckbeanspruchungen wegen der hier gültigen anderen Parameter (Elastizitätsmodul/Wärmedehnungskoeffizient/Wärmeleitzahl) unterschiedlich zum restlichen Werkstoff, mit dem Ergebnis, daß sich die für ein hydrodynamisches Laufverhalten angestrebten Erhebungen und Vertiefungen ausbilden.

**Patentansprüche**

1. Vorrichtung zur Lagerung und/oder Abdichtung einer Welle (1) gegenüber einem von der Welle durchdrungenen Träger (2), umfassend einen am Träger (2) drehfest gehaltenen sowie in Axial- und Radialrichtung abgestützten Körper (6) mit einer ersten Gleitfläche (7) und einen an der Welle (1) drehfest gehaltenen sowie in Axial- und Radialrichtung abgestützten, die Welle (1) ringförmig umgebenden zweiten Körper (8) mit einer zweiten Gleitfläche (10), wobei beide Gleitflächen (7, 10) im Ruhezustand der Vorrichtung in einer gemeinsamen Berührungsfläche (11) aneinanderliegen, welche die geometrische Form einer Rotationsfläche aufweist, deren Achse die Wellenachse (5) ist und die Gleitfläche (7) des einen der beiden Körper (6, 8) im Betriebszustand der Vorrichtung eine Gestalt annimmt, bei der in Richtung der relativen Gleitbewegung aufeinanderfolgende minimale Erhebungen und Vertiefungen dieser Rotationfläche überlagert sind, dadurch gekennzeichnet, daß der eine Körper (6) eine Mehrzahl aufeinanderfolgender räumlicher Bereiche (14a, 14b) enthält, in denen der Elastizitätsmodul und/oder der Wärmedehnungskoeffizient und/oder die Wärmeleitzahl von den entsprechenden Werten des die Bereiche enthaltenden restlichen Werkstoffes des Körpers abweicht, wobei in Abschnitten (12a - 12h) dieses Körpers (6), welche durch die Wellenachse (5) enthaltende, gleiche Zentriwinkel (A) aufweisende Ebenen (13) definiert sind, jeweils ein Bereich (14a, 14b) angeordnet ist.

2. Vorrichtung nach Anspruch 1, dadurch gekennzeichnet, daß die Bereiche (14a, 14b) durch den restlichen Werkstoff des einen Körpers (6) voneinander getrennt sind.

3. Vorrichtung nach Anspruch 1, dadurch gekennzeichnet, daß aufeinanderfolgende Bereiche (14a, 14b) unmittelbar aneinandergrenzen.

4. Vorrichtung nach Anspruch 1 oder 2, dadurch gekennzeichnet, daß die Bereiche (14a, 14b) an ihren Grenzen einen stetigen Übergang hinsichtlich der Werte für den Elastizitätsmodul bzw. Wärmedehnungskoeffizienten bzw. der Wärmeleitzahl zum restlichen Werkstoff des einen Körpers (6) und ggf. zum angrenzenden folgenden Bereich aufweisen.

5. Vorrichtung nach Anspruch 1, 2, 3 oder 4, dadurch gekennzeichnet, daß der eine Körper (6) eine erste Gruppe von Bereichen (14a) und eine zweite Gruppe von Bereichen (14b) enthält, wobei die Bereiche (14a) der ersten Gruppe alternierend zu den Bereichen (14b) der zweiten Gruppe in aufeinanderfolgenden Abschnitten (12a-12h) des einen Körpers (6) angeordnet sind und daß in den Bereichen (14a) der ersten Gruppe ein höherer und in den Bereichen (14b) der zweiten Gruppe ein niedrigerer Wert für den Elastizitätsmodul bzw. Wärmedehnungskoeffizient bzw. die Wärmeleitzahl als im restlichen Werkstoff des einen Körpers (6) vorliegt.

6. Vorrichtung nach Anspruch 1 oder 5, dadurch gekennzeichnet, daß sich die Bereiche (14a, 14b) nur über Teile der axialen Länge (L) und/oder der radialen Weite (W) des einen Körpers (6) erstrecken.

7. Vorrichtung nach Anspruch 1 oder 5, dadurch gekennzeichnet, daß alle Bereiche (14a, 14b) bzw. wenigstens die einer von zwei Gruppen zugeordneten Bereiche nahe der Gleitfläche (7) des einen Körpers (6) angeordnet sind.

8. Vorrichtung nach Anspruch 1 oder 5, dadurch gekennzeichnet, daß die Bereiche (14a, 14b) bzw. die jeweils zu einer Gruppe gehörenden Bereiche im wesentlichen eine übereinstimmende Gestalt aufweisen.

9. Vorrichtung nach Anspruch 1 oder 5, dadurch gekennzeichnet, daß der eine Körper (6) ein vollwandiges, einstückiges Werkstück aus einem einheitlichen Werkstoff ist.

10. Vorrichtung nach Anspruch 1, 5 oder 9, dadurch gekennzeichnet, daß der Werkstoff des einen Körpers (6) ein Sinterwerkstoff ist.

11. Vorrichtung nach Anspruch 10, dadurch gekennzeichnet, daß der Werkstoff des einen Körpers (6) aus Siliziumkarbid besteht.

12. Vorrichtung nach Anspruch 1, 9, 10 oder 11, dadurch gekennzeichnet, daß sich die Bereiche (14a, 14b) durch ihre unterschiedliche Dichte vom restlichen Werkstoff des einen Körpers (6) unterscheiden.

13. Vorrichtung nach Anspruch 11, dadurch gekennzeichnet, daß sich die Bereiche (14a, 14b) durch ihren unterschiedlichen Gehalt an Silizium vom restlichen Werkstoff des einen Körpers (6) unterscheiden.

14. Vorrichtung nach Anspruch 1, 9, 10 oder 11, dadurch gekennzeichnet, daß sich die Bereiche (14a, 14b) durch ihre unterschiedliche Korngröße vom restlichen Werkstoff des einen Körpers (6) unterscheiden.

**Claims**

1. A device for bearing and/or sealing a shaft (1) against a support (2) penetrated by the shaft, comprising a body (6) held rotationally fixed and axially and radially supported on the support (2) and having a first sliding surface (7), and a second body (8), annularly surrounding the shaft (1), held rotationally fixed and axially and radially supported on the shaft (1), and having a second sliding surface (10), both sliding surfaces (7, 10) bearing against each other, when the device is in static condition, in a common contact surface which has the geometrical form of a surface of revolution, the axis of which is the shaft axis (5) and the sliding surface (7) of the one of the two bodies (6, 8) takes on a shape in operating condition of the device, with which, in the direction of the relative sliding movement, successive minimum elevations and depressions are superimposed on this surface of revolution, characterised in that the one body (6) contains a plurality of successive spatial regions (14a, 14b) in which the modulus of elasticity and/or the coefficient of thermal expansion and/or the coefficient of thermal conduction deviates from the corresponding values of the remaining material of the body containing the regions, one region (14a, 14b) being arranged in each case in sections (12a - 12h) of this body (6) which are defined by planes (13) containing the shaft axis (5) and having equal centre angles (A).

2. A device according to claim 1, characterized in that the regions (14a, 14b) are separated from one another by the remaining material of the one body (6).

3. A device according to claim 1, characterized in that successive regions (14a, 14b) are immediately adjacent to one another.

4. A device according to claim 1 or 2, characterized in that the regions (14a, 14b) have a smooth transition at their boundaries in respect of the values for the modulus of elasticity or the coefficient of thermal expansion or the coefficient of thermal conduction to the remaining material of the one body (6) and, if appropriate, to the adjacent following region.

5. A device according to any of claims 1, 2, 3 or 4, characterized in that the one body (6) contains a first group of regions (14a) and a second group of regions (14b), the regions (14a) of the first group being arranged alternatively to the regions (14b) of the second group in successive sections (12a - 12h) of the one body (6), and in that in the regions (14a) of the first group there is a higher value and in the regions (14b) of the second group there is a lower value for the modulus of elasticity or the coefficient of thermal expansion or the coefficient of thermal conduction than in the remaining material of the one body (6).

6. A device according to claim 1 or 5, characterized in that the regions (14a, 14b) only extend over parts of the axial length (L) and/or of the radial width (W) of the one body (6).

7. A device according to claim 1 or 5, characterized in that all regions (14a, 14b) or at least the regions assigned to one of two groups are arranged near to the sliding surface (7) of the one body (6).

8. A device according to claim 1 or 5, characterized in that the regions (14a, 14b) or the regions belonging in each case to one group essentially have a matching shape.

9. A device according to claim 1 or 5, characterized in that the one body (9) is a solid-wall, one-piece workpiece of a uniform material.

10. A device according to any of claims 1, 5 or 9, characterized in that the material of the one body (6) is a sinter material.

11. A device according to claim 10, characterized in that the material of the one body (6) is composed of silicon carbide.

12. A device according to any of claims 1, 9, 10 or 11, characterized in that the regions (14a, 14b) differ from the remaining material of the one body (6) by their different density.

13. A device according to claim 11, characterized in that the regions (14a, 14b) differ from the remaining material of the one body (6) by their different content of silicon.

14. A device according to any of claims 1, 9, 10 or 11, characterized in that the regions (14a, 14b) differ from the remaining material of the one body (6) by their different grain size.

## Revendications

1. Dispositif pour réaliser l'installation sur ses paliers et/ou son étanchéité d'un arbre (1) par rapport à un support (2) traversé par ledit arbre, comprenant un corps (6) maintenu solidairement sur le support (2) et supporté dans le sens axial et radial comprenant une première surface coulissante (7), et un deuxième corps (8) comprenant une deuxième surface coulissante (10) maintenue solidairement sur l'arbre (1) et soutenue dans le sens axial et radial le deuxième corps (8) entourant l'arbre (1) de manière circulaire, les deux surfaces coulissantes (7, 10) s'appliquant l'une sur l'autre à l'état de repos du dispositif pour former une surface de contact commune (11) qui présente la forme géométrique d'une surface de rotation dont l'axe est l'axe (5) de l'arbre et, lorsque le dispositif est en fonctionnement, la surface coulissante (7) de l'un des deux corps (6, 8) prenant une forme dans laquelle dite surface de rotation viennent se superposer des bosses et des creux de grandeur minimale se suivant dans le sens du coulissement relatif, caractérisé par le fait que l'un des corps (6) contient plusieurs zones (14a, 14b) adjacentes dans lesquelles le module d'élasticité et/ou le coefficient de dilatation thermique et/ou le coefficient de conductibilité thermique s'écartent des valeurs correspondantes du reste du matériau constituant le corps et contenant ces zones, alors que dans des sections (12a - 12h) de ce corps (6) définies par des plans (13) présentant des angles au centre (A) identiques et contenant l'axe (5) de l'arbre est disposée respectivement une zone (14a, 14b).

2. Dispositif selon la revendication 1, caractérisé par le fait que les zones (14a, 14b) sont séparées les unes des autres par le matériau restant d'un corps (6).

Dispositif selon la revendication 1, caractérisé par le fait que des zones consécutives (14a, 14b) sont immédiatement adjacentes.

4. Dispositif selon la revendication 1 ou 2, caractérisé par le fait que les zones (14a, 14b) présentent sur leur limite une transition constante concernant les valeurs du module d'élasticité ou du coefficient de dilatation thermique ou du coefficient de conductibilité thermique par rapport au matériau restant de l'un des corps (6) et le cas échéant par rapport à la zone adjacente limite.

5. Dispositif selon les revendications 1, 2, 3 ou 4, caractérisé par le fait que l'un des corps (6) contient un premier groupe de zones (14a) et un deuxième groupe de zones (14b), les zones (14a) du premier groupe étant disposées en alternance aux zones (14b) du deuxième groupe dans des sections adjacentes (12a - 12h) de l'un des corps (6) et par le fait que dans les zones (14a) du premier groupe la valeur du module d'élasticité ou du coefficient de dilatation thermique ou du coefficient de conductibilité thermique est plus élevée et que dans les zones (14b) du deuxième groupe cette valeur est plus basse que dans le restant du matériau de l'un des corps (6).

6. Dispositif selon la revendication 1 ou 5, caractérisé par le fait que les zones (14a, 14b) ne s'étendent que sur des parties de la longueur axiale (L) et/ou de la largeur radiale (W) de l'un des corps (6).

7. Dispositif selon la revendication 1 ou 5, caractérisé par le fait que toutes les zones (14a, 14b) ou au moins les zones associées à l'un des deux groupes sont disposées à proximité de la surface coulissante (7) de l'un des corps (6).

8. Dispositif selon la revendication 1 ou 5, caractérisé par le fait que les zones (14a, 14b) ou les zones appartenant respectivement à un groupe présentant une forme sensiblement concordante.

9. Dispositif selon la revendication 1 ou 5, caractérisé par le fait que l'un des corps (6) est une pièce à usiner en une seule pièce à paroi pleine réalisée en un matériau homogène.

10. Dispositif selon la revendication 1, 5 ou 9, caractérisé par le fait que le matériau de l'un des corps (6) est un matériau fritté.

11. Dispositif selon la revendication 10, caractérisé par le fait que le matériau de l'un des corps (6) est constitué en carbure de silicium.

12. Dispositif selon les revendications 1, 9, 10 ou 11, caractérisé par le fait que les zones (14a, 14b) se distinguent par leur densité différente par rapport à celle du restant du matériau de l'un des corps (6).

13. Dispositif selon la revendication 11, caractérisé par le fait que les zones (14a, 14b) se distinguent du restant du matériau de l'un des corps (6) par leur teneur différente en silicium.

14. Dispositif selon les revendications 1, 9, 10 ou 11, caractérisé par le fait que les zones (14a, 14b) se distinguent du matériau restant de l'un des corps (6) par leur granulométrie différente.

Fig. 1

Fig. 2